(19) Europäisches Patentamt
European Patent Office
Office européen des brevets

(11) **EP 3 404 977 A1**

(12) **EUROPEAN PATENT APPLICATION**
published in accordance with Art. 153(4) EPC

(43) Date of publication:
**21.11.2018 Bulletin 2018/47**

(51) Int Cl.:
***H04W 72/04*** (2009.01)

(21) Application number: **17738191.0**

(22) Date of filing: **13.01.2017**

(86) International application number:
**PCT/CN2017/071100**

(87) International publication number:
**WO 2017/121378 (20.07.2017 Gazette 2017/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.01.2016 CN 201610023653**

(71) Applicant: **Sony Corporation**
**Tokyo 108-0075 (JP)**

(72) Inventors:
• **SUN, Chen**
  **Beijing 100028 (CN)**
• **GUO, Xin**
  **Beijing 100028 (CN)**
• **CHEN, Jinhui**
  **Beijing 100028 (CN)**

(74) Representative: **D Young & Co LLP**
**120 Holborn**
**London EC1N 2DY (GB)**

(54) **APPARATUSES AND METHODS FOR NETWORK MANAGEMENT SIDE AND USER EQUIPMENT SIDE, AND CENTRAL MANAGEMENT APPARATUS**

(57)     Provided in the present disclosure are apparatuses and methods for a network management side and a user equipment side in a wireless communication system, and a central management apparatus and a method. The apparatus for a network management side in a wireless communication system comprises: an obtaining unit, configured to obtain a distribution-related user characteristic of a specific user equipment in a region served by the wireless communication system; and a determining unit, configured to determine, according to the user characteristic obtained by the obtaining unit, classification of resources in a wireless transmission resource pool to be used by the specific user equipment.

Figure 1

## Description

The present application claims the priority to Chinese Patent Application No. 201610023653.0, titled "APPARATUSES AND METHODS FOR NETWORK MANAGEMENT SIDE AND USER EQUIPMENT SIDE, AND CENTRAL MANAGEMENT APPARATUS", filed on January 14, 2016 with the Chinese State Intellectual Property Office, which is incorporated herein by reference in its entirety.

## FIELD OF THE INVENTION

Embodiments of the present disclosure generally relates to the field of wireless communications, and in particular to an apparatus and a method for network management side in a wireless communication system, an apparatus and a method for user equipment side in a wireless communication system, and a central management apparatus and a method for multiple wireless communication systems.

## BACKGROUND OF THE INVENTION

With the rapid development of computers and communication technologies, wireless devices and wireless data have grown exponentially, and the versatility of wireless service cases related to the coexistence of wireless communication systems changes day by day, which brings about unlimited business opportunities, and thus gets more and more attention from the industry. When multiple user equipment share particular wireless transmission resources, how to allocate resources efficiently and how to implement resource sharing across communication systems or even across operators have become problems to be solved.

For example, the vehicle-to-vehicle (V2V) jointly initiated by the automotive manufacturers is initially used for security travel management in the vehicle system and between vehicles being close to each other, to reduce the frequency of traffic accidents. Currently, the V2V is used to establish an in-vehicle communication device network, and transmit and share information via the network, which improves the security of travelling vehicles. However, the in-vehicle devices of vehicles on the road may belong to multiple different standards or multiple different operators under the same standard, which results in complicated information interaction between the vehicles, and increases the delay and signaling overhead. Therefore, it is desirable to reduce the delay, so as to transmit security information in a real time manner.

## SUMMARY OF THE INVENTION

In the following, an overview of the present invention is given simply to provide basic understanding to some aspects of the present invention. It should be understood that this overview is not an exhaustive overview of the present invention. It is not intended to determine a critical part or an important part of the present invention, nor to limit the scope of the present invention. An object of the overview is only to give some concepts in a simplified manner, which serves as a preface of a more detailed description described later.

According to an aspect of the present disclosure, an apparatus for network management side in a wireless communication system is provided. The apparatus includes an acquiring unit and a determining unit. The acquiring unit is configured to acquire a user feature of particular user equipment in a region served by the wireless communication system, which is related to distribution of the particular user equipment. The determining unit is configured to determine, based on the user feature acquired by the acquiring unit, division of resources in a wireless transmission resource pool to be used by the particular user equipment.

According to another aspect of the present disclosure, an apparatus for user equipment side in a wireless communication system is provided. The apparatus includes a request generating unit and a selecting unit. The request generating unit is configured to generate a connection request including a device type identifying the user equipment. The selecting unit is configured to select resources to be used based on information, which is received from a network management apparatus, on division of a wireless transmission resource pool in response to the connection request.

According to another aspect of the present disclosure, a central management apparatus for multiple wireless communication systems is provided. The central management apparatus includes an acquiring unit, a calculating unit and a notifying unit. The acquiring unit is configured to acquire information on a user feature of particular user equipment in each of the managed wireless communication systems, which is related to distribution of the particular user equipment. The calculating unit is configured to calculate, based on the information on the user feature acquired by the acquiring unit, division of resources in a wireless transmission resource pool to be used by the particular user equipment. The notifying unit is configured to notify the multiple wireless communication systems of the information on the division of resources.

According to an aspect of the present disclosure, a method for network management side in a wireless communication system is provided. The method includes: acquiring a user feature of particular user equipment in a region served by the wireless communication system, which is related to distribution of the particular user equipment; and determining, based on the acquired user feature, division of resources in a wireless transmission resource pool to be used by the particular user equipment.

According to another aspect of the present disclosure, a method for user equipment side in a wireless communication system is provided. The method includes: generating a connection request including a device type identifying the user equipment; and selecting resources to be used based on information, which is received from a network management apparatus, on division of a wireless transmission resource pool in response to the connection request.

According to another aspect of the present disclosure, a central management method for multiple wireless communication systems is provided. The central management method includes: acquiring information on a user feature of particular user equipment in each of the managed wireless communication systems, which is related to distribution of the particular user equipment; calculating, based on the acquired information on the user feature, division of resources in a wireless transmission resource pool to be used by the particular user equipment; and notifying the multiple wireless communication systems of information on the division of resources.

According to other aspects of the present disclosure, there are further provided computer program codes and computer program products for implementing methods for network management side and user equipment side in a wireless communication system and a central management method for multiple wireless communication systems, and a computer readable storage medium on which the computer program codes for implementing the methods is recorded.

In the embodiments of the present disclosure, division of resources in a wireless transmission resource pool to be used by particular user equipment is determined based on a user feature of the particular user equipment in a region, which is related to distribution of the particular user equipment, so that at least one of the following advantages can be achieved: effectively ensuring the utilization efficiency of wireless transmission resources, reducing the delay of information interaction, reducing the delay of selecting available transmission resources and correctly receiving information by target users, and reducing the signaling overhead of the information interaction.

These and other advantages of the present disclosure will be more apparent by illustrating in detail a preferred embodiment of the present invention in conjunction with accompanying drawings below.

## BRIEF DESCRIPTION OF THE DRAWINGS

To further set forth the above and other advantages and features of the present invention, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present invention and should not be construed as a limitation to the scope of the invention. In the accompanying drawings:

Figure 1 is a block diagram showing a structure of an apparatus for network management side in a wireless communication system according to an embodiment of the present disclosure;

Figure 2 shows a schematic diagram of partial overlapping of regions served by two wireless communication systems;

Figure 3 is a block diagram showing a structure of an apparatus for user equipment side in a wireless communication system according to an embodiment of the present disclosure;

Figure 4 is a block diagram showing a structure of a central management apparatus for multiple wireless communication systems according to an embodiment of the present disclosure;

Figure 5 shows a schematic distribution diagram of vehicles in V2V at an intersection;

Figure 6 shows a procedure of information interaction between a vehicle V and an evolved Node B (eNB);

Figure 7 shows exemplary road distribution settings;

Figure 8 shows a schematic diagram of a signaling procedure in a case that there are multiple operators in the same region;

Figure 9 shows a schematic diagram of an information procedure where a division granularity is calculated by a central management apparatus;

Figure 10 shows a schematic diagram of a signaling procedure in a case that multiple PALs share resources in a spectrum access system;

Figure 11 shows a schematic diagram of an information procedure where a division granularity is calculated by a central management apparatus in a spectrum access system;

Figure 12 shows a schematic distribution diagram of a census tract;

Figure 13 shows a flowchart of a method for network management side in a wireless communication system according to an embodiment of the present disclosure;

Figure 14 shows a flowchart of a method for user equipment side in a wireless communication system according to an embodiment of the present disclosure;

Figure 15 shows a flowchart of a central management method for multiple wireless communication systems according to an embodiment of the present disclosure;

Figure 16 is a block diagram illustrating a first example of a schematic configuration of an evolved Node B (eNB) to which the technology of the present disclosure may be applied;

Figure 17 is a block diagram illustrating a second example of a schematic configuration of an eNB to which the technology of the present disclosure may be applied;

Figure 18 is a block diagram illustrating an example of a schematic configuration of a smart phone to which the technology of the present disclosure may be applied;

Figure 19 is a block diagram illustrating an example of a schematic configuration of a car navigation device to which the technology of the present disclosure may be applied; and

Figure 20 is a block diagram of an exemplary block diagram illustrating the structure of a general purpose personal computer capable of realizing the method and/or device and/or system according to the embodiments of the present invention.

## DETAILED DESCRIPTION OF THE EMBODIMENTS

An exemplary embodiment of the present invention will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a business, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present invention due to unnecessary details, only a device structure and/or processing steps closely related to the solution according to the present invention are illustrated in the accompanying drawing, and other details having little relationship to the present invention are omitted.

<First Embodiment>

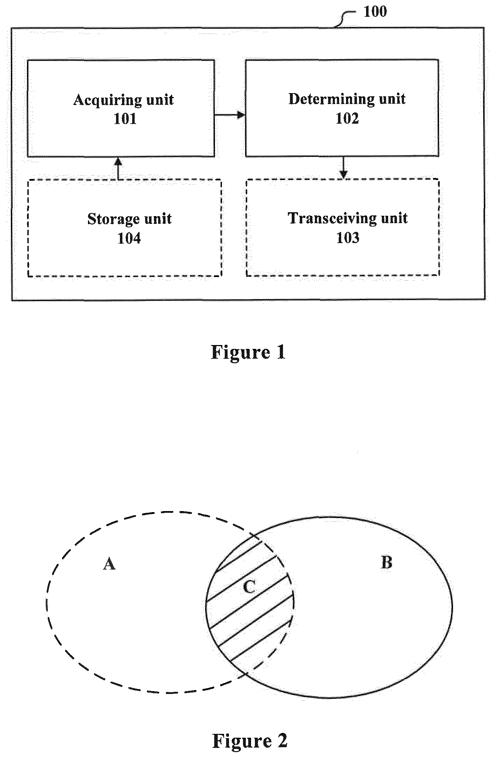

Figure 1 is a block diagram showing a structure of an apparatus 100 for network management side in a wireless communication system according to an embodiment of the present disclosure. As shown in Figure 1, the apparatus 100 includes an acquiring unit 101 and a determining unit 102. The acquiring unit 101 is configured to acquire a user feature of particular user equipment in a region served by the wireless communication system, which is related to distribution of the particular user equipment. The determining unit 102 is configured to determine, based on the user feature acquired by the acquiring unit 101, division of resources in a wireless transmission resource pool to be used by the particular user equipment.

The wireless communication system described herein includes, for example, a network management device and user equipment. The network management device and the user equipment cooperate to perform wireless communication between the network management device and the user equipment. By way of example but not for limitation, the wireless communication system may include a cellular mobile communication system such as an LTE system, a cognitive radio communication system. The wireless communication system provides wireless communication services for user equipment in a coverage range of the wireless communication system. It should be understood that there may be multiple wireless communication systems in the same region, and each of the multiple wireless communication systems provides wireless communication services for user equipment served by the wireless communication system in the region. The wireless communication systems may be of different types or adopt different communication protocols, and coverage ranges of the wireless communication systems may not completely coincide with each other.

The network management device may be a base station or any wireless communication management device cooperating with the user equipment. For example, the network management device may also be a baseband cloud device under a Cloud-RAN/Centralized-RAN (C-RAN) architecture (there may be no concept of cells), such as any one BBU in a BBU pool in which BBUs communicate with each other at a high speed under the C-RAN architecture, or a coordinator in the cognitive radio communication system, or the like.

The user equipment may be various mobile terminals such as a mobile terminal having a cellular communication capability, a smart vehicle, a smart wearable device, or may be an infrastructure for performing wireless communication with a macro base station, such as a small cell base station. The number of user equipment may be one or more. In the case of multiple user equipment, the user equipment may be of different types. The types of the user equipment may be divided according to service types, communication quality requirements, and the like. A particular type of user equipment (which is hereafter also referred to as particular user equipment) may be allocated with resources in a different manner from resource allocation manners for other types of user equipment and/or by using particular wireless transmission resources. The type of the user equipment may be denoted by, for example, a particular identifier in a connection request.

For example, the particular user equipment herein may be vehicle-to-vehicle (V2V) user equipment or user equipment of a wireless communication system having a priority access license (PAL) in a spectrum access system (SAS). For ease of understanding, the present technology is described in detail in conjunction with specific examples of the two cases in the following. However, it should be understood that the application range of the present technology is not limited by the detailed description.

The network management device described above may include the apparatus 100. In this case, the acquiring unit 101 acquires a user feature of particular user equipment, which is related to distribution of the particular user equipment. Such a user feature reflects a distribution condition of the particular user equipment in a region served by the wireless communication system.

In an example, the user feature of the particular user equipment may be denoted by density information of the particular user equipment in the region. The density information may be acquired by counting the number of particular user equipment in unit area. In another example, the user feature may be a density of the particular user equipment which transmit information in unit time in the region. The information may be information belonging to security services. Similarly, the density of the particular user equipment which transmit information in unit time in the region is a ratio of the number of particular user equipment which transmit information in unit time in the region to an area of the region.

In addition, the user feature may also be denoted by other parameters such as specific spatial distribution of the particular user equipment. In the following detailed description, the density information is taken as an example, but it should be understood that this is not limiting.

In an example, the region served by the wireless communication system may include multiple sub-regions. In this case, the acquiring unit 101 may acquire a user feature of particular user equipment in each of the sub-regions, which is related to distribution of the particular user equipment, and then the determining unit 102 may determine different divisions of wireless transmission resources based on the user features of particular user equipment in different sub-regions, which are respectively related to the distribution of the particular user equipment in the different sub-regions. By dividing the region into multiple sub-regions, the wireless transmission resources used by the particular user equipment in different sub-regions may be more accurately divided, so that the delay of selecting the wireless transmission resources and the delay of information interaction can be better reduced.

In a case that there is only one wireless communication system in a region, the acquiring unit 101 only needs to acquire a user feature of particular user equipment in the wireless communication system in the region.

In the case that there are two or more wireless communication systems in a region, for example, there are wireless communication systems operated by two or more operators, the acquiring unit 101 further needs to consider influence of a user feature of particular user equipment served by other wireless communication systems, which is related to distribution of the particular user equipment served by other wireless communication systems. For ease of description, the wireless communication system in which the apparatus 100 is located is referred to as a first wireless communication system, and the other wireless communication systems are collectively referred to as a second wireless communication system. It should be understood that "a first" and "a second" are merely for distinction and do not represent any limitation.

In this case, the particular user equipment include first particular user equipment served by the first wireless communication system and second particular user equipment served by the second wireless communication system, and a region served by the second wireless communication system is at least partially overlapped with the region served by the first wireless communication system. The acquiring unit 101 is configured to: for the overlapped region, acquire a first user feature of the first particular user equipment which is related to distribution of the first particular user equipment and a second user feature of the second particular user equipment which is related to distribution of the second particular user equipment, and acquire a user feature of particular user equipment in the overlapped region, which is related to distribution of the particular user equipment in the overlapped region, by combining the first user feature and the second user feature. The overlapped region may be, for example, a sub-region or a part of a sub-region.

Specifically, the acquiring unit 101 may be configured to acquire the second user feature from the second wireless communication system and provide the first user feature to the second wireless communication system. That is, user features of particular user equipment which are related to distribution of the particular user equipment are interacted between different wireless communication systems, so that each of the wireless communication systems can obtain an actual distribution condition of the particular user equipment in the overlapped region.

In the example in which the user feature is denoted by the density information of the particular user equipment in the region, the acquiring unit 101 may add first density information on a density of the first particular user equipment in the overlapped region and second density information which is acquired from the second wireless communication system, on a density of the second particular user equipment in the overlapped region, as the density information of the particular user equipment in the overlapped region. In addition, the density information of the particular user equipment in the overlapped region may also be acquired by some other weighted calculation methods for the first density information and the second density information.

For non-overlapped regions (for example, corresponding to other sub-regions and/or other parts of a sub-region), the first wireless communication system and the second wireless communication system may respectively acquire user features which are related to distribution, in other regions than the overlapped region by the respective acquiring units 101.

Specifically, referring to Figure 2, in a scenario, a region served by the first wireless communication system and a region served by the second wireless communication system only partially overlap, and the density information in respective parts of the entire region may be different. As shown in Figure 2, a region served by the first wireless communication system is indicated by A, a region served by the second wireless communication system is indicated by B, and a region (i.e., the overlapped region) commonly served by the first wireless communication system and the second wireless communication system is indicated by C. For the region C, particular user equipment include not only particular user equipment in the first wireless communication system but also particular user equipment in the second wireless communication system. Therefore, a user equipment density in C may be different from user equipment densities in other parts than C within A.

In the case that a region is simultaneously served by multiple wireless communication systems, the acquiring units 101 of the multiple wireless communication systems may directly interact with each other to acquire the user feature. In addition, in an example, multiple wireless communication systems may coordinate communication operations in a region via a central management apparatus, and the acquiring units 101 of the multiple wireless communication systems may exchange user features which are related to distribution, acquired by the respective wireless communication systems via the central management apparatus. For example, the central management apparatus manages user features which are related to distribution, in regions or sub-regions, and provides the user features to the acquiring units of the communication systems.

Since the distribution of particular user equipment in a region served by the wireless communication system may change constantly, a user feature which is related to the distribution may change correspondingly in different time periods. Therefore, the acquiring unit 101 may further be configured to periodically update the user feature which is related to the distribution of the particular user equipment in the region. As described above, in the case that a region is served by the first wireless communication system and the second wireless communication system simultaneously, similarly, the acquiring unit 101 may further be configured to periodically update the first user feature and the second user feature.

Further, the acquiring unit 101 is configured to perform updating in at least one of the following manners: updating in response to an access operation or a disconnection operation of each of the particular user equipment, and updating periodically. For example, in the case that the user feature which is related to the distribution is denoted by the density of the particular user equipment, the acquiring unit 101 acquires the density information by counting the number of particular user equipment in unit area, and updates the density information when the number changes and/or updates the density information periodically. Specifically, the number of particular user equipment changes when an access or disconnection operation of particular user equipment occurs. The access operation of each of the particular user equipment includes activation of the particular user equipment in the above region and the particular user equipment switching to enter into the region. Correspondingly, the disconnection operation of each of the particular user equipment includes the particular user equipment being turned off in the above region and the particular user equipment switching to go out of the region. In the case of being periodically updated, accuracy of the density information is determined by the updating period.

In a case that the user feature which is related to the distribution is denoted by a density of particular user equipment that transmit information in unit time in the region, the acquiring unit 101 may update the density information in response to a change (for example, starting transmitting information or stopping transmitting information) of a communication state of the particular user equipment and/or update the density information periodically. Similarly, in the case of being periodically updated, the accuracy of the density information is determined by the updating period.

By updating the user feature which is related to the distribution, the acquiring unit 101 can accurately acquire the user feature, so that the determining unit 102 to be described later can realize dynamic division of wireless transmission resources temporally.

The determining unit 102 determines, based on the user feature acquired by the acquiring unit 101, the division of resources in the wireless transmission resource pool to be used by the particular user equipment. The wireless transmission resource pool is a set of wireless transmission resources to be allocated to the particular user equipment. The set may be divided into several parts which can be respectively used by multiple particular user equipment simultaneously.

The wireless transmission resource pool may be divided in a spectrum dimension, for example, divided into multiple basic resource units in the spectrum dimension in accordance with a division granularity. Each of the particular user equipment may communicate using one of the basic resource units. For example, each of the particular user equipment may use the basic resource units in a random way.

In an example, in a case that distribution of particular user equipment in a region is dense, i.e., has a high density, the determining unit 102 may divide the resources in the wireless transmission resource pool with a fine division granularity, to meet requirements of particular user equipment as many as possible for the wireless transmission resources. On the contrary, in a case that the distribution of the particular user equipment in the region is sparse, i.e., has a low density, the determining unit 102 may divide the resources in the wireless transmission resource pool with a coarse division granularity, so that each of the particular user equipment can transmit using more transmission resources. With the setting of the division granularity, the division of wireless transmission resources may be adjusted based on the number of particular user equipment using the wireless transmission resources, thereby achieving high resource utilization efficiency while ensuring communication quality, and effectively reducing time cost of selecting resources by the particular user equipment.

Further, in an example, the determining unit 102 determines the division of resources in the wireless transmission resource pool based on the user feature in the region and a message admission rate. The message admission rate is a ratio of the number of basic resource units to the number of messages that arrive simultaneously (i.e., the number of particular user equipment that use the wireless transmission resources simultaneously). Since the wireless transmission resource pool is divided based on two factors including the user feature and the message admission rate, a certain access success rate of the user equipment can be ensured while ensuring resource utilization efficiency, the delay of information interaction can be further reduced, the delay of selecting available transmission resources and correctly receiving information by target users can be reduced, and the signaling overhead of the information interaction can be reduced.

Specifically, the division granularity is set so that the larger the density of the particular user equipment in the region is, and the higher the message admission rate is, the finer the division granularity is. In a case that the size of the wireless transmission resource pool is fixed, the finer the division granularity is, the larger the number of basic resource units is, so that the wireless transmission resources can be used by more particular user equipment simultaneously.

As an example, the division granularity may be set in such a way that the number of the basic resource units is minimized under a condition that the communication quality of the particular user equipment and the message admission rate are maintained at predetermined levels. The communication quality may be represented by, for example, a signal-to-interference plus noise ratio (SINR). Due to the above two constraints, the setting of the division granularity eventually becomes an optimization problem, which may be implemented by various optimization algorithms including but not limited to linear programming, game theory, graph theory, and the like. Since the division granularity is set in this manner, the division of the wireless transmission resource pool can be reasonably implemented based on features of the communication system, and the delay of using the wireless transmission resources by the particular user equipment can be significantly reduced while maintaining high radio resource utilization rate and ensuring the communication quality of the particular user equipment.

In order to simplify the signaling transmission, division granularities may be set in one to one correspondence with configuration schemes of the basic resource units in the wireless transmission resource pool. In other words, the correspondence between a division granularity and start and end positions of each of the basic resource units in the spectrum dimension at the division granularity is agreed in advance between the apparatus 100 and the particular user equipment. The agreement in advance may be written into, for example, factory settings of the user equipment, or may be implemented by automatic setting when the user equipment is powered on, or by signaling between the apparatus 100 and the particular user equipment. In this way, when the particular user equipment knows the division granularity, the specific configuration of each of the basic resource units can be known.

When the distribution of particular user equipment in a region changes, the determining unit 102 needs to recalculate the division of resources, so as to maintain the accuracy. Therefore, the determining unit 102 may be configured to periodically calculate the division of resources, and/or calculate the division of resources when a change of the acquired distribution exceeds a predetermined range. For example, the density of the user equipment may be divided into multiple levels. The division of resources may be recalculated when the density changes from a level to another level, and/or the division of resources may be recalculated at a predetermined time interval. As described above, the division of resources may be performed in accordance with the division granularity of the wireless transmission resource pool in the spectrum dimension. In this way, the frequency of resource reallocation and system reconfiguration can be reduced.

It should be understood that in order to obtain more flexibility, the basic resource units may also be not uniformly divided according to actual application scenarios.

In another aspect, referring back to Figure 2, since the user equipment density in C may be different from user equipment densities in other parts than C within A, the division of resources determined by the determining unit 102 may also be different. For example, when the particular user equipment moves from other parts to the part C, the division of resources may change. Therefore, the division of resources in the wireless transmission resource pool has spatial dynamic properties in addition to temporal dynamic properties. As described above, in the case that a region is divided into multiple sub-regions, the determining unit 102 may further determine, based on a user feature in each of the sub-regions, the division of wireless transmission resources to be used by particular user equipment in the sub-region.

Further, referring to Figure 1, the apparatus 100 may further include a transceiving unit 103. The transceiving unit 103 is configured to transmit information on the division determined by the determining unit 102 to the particular user equipment. In this case, upon receiving the information on the division, the particular user equipment may select transmission resources on its own based on the information. The information on the division may include, for example, the division granularity of the wireless transmission resource pool in the spectrum dimension.

In addition, when the division changes, the transceiving unit 103 may further notify the particular user equipment of the change. Alternatively/Additionally, the transceiving unit 103 may also periodically notify the particular user equipment of the change of the division.

Further, in the case that a region is commonly served by multiple wireless communication systems, the acquiring units 102 of the multiple wireless communication systems may exchange the user features which are related to distribution via the respective transceiving units 103.

In another example, the transceiving unit 103 of the apparatus 100 may not notify the particular user equipment of the information on the division, instead, the apparatus 100 directly allocates resources for the particular user equipment based on the division and notifies the particular user equipment by downlink information. In this case, the particular user equipment do not need to know the information on the division.

In the example in which the division granularities are in one to one correspondence with the configuration schemes of the basic resource units in the wireless transmission resource pool, since only the particular user equipment need to be notified of the division granularity, the amount of information is small, and the signaling is simple. In addition, in order to obtain more flexibility, the information on the division may include more content such as a specific configuration scheme, besides the division granularity. In the case that the basic resource units are not uniformly divided, the content in the corresponding information on the division also changes.

Further, referring to Figure 1, the apparatus 100 may further include a storage unit 104. The storage unit 104 is configured to store and update the user feature of the particular user equipment in the region (or sub-region), which is related to the distribution of the particular user equipment. The acquiring unit 102 may further be configured to query the user feature in the storage unit 104. In this case, the wireless communication system stores the user feature of the particular user equipment served by the wireless communication system, which is related to distribution of the particular user equipment.

In this way, the user feature which is related to distribution can be interacted between different operators or communication systems, so that the wireless transmission resources can be coordinately used, improving the resource utilization efficiency, and reducing the delay and the signaling overhead of the information interaction. In addition, the coordination usage of the resources facilitates multi-system coexistence.

The acquiring unit 101 and the determining unit 102 in the apparatus 100 may be implemented by one or more processing circuits.

<Second Embodiment>

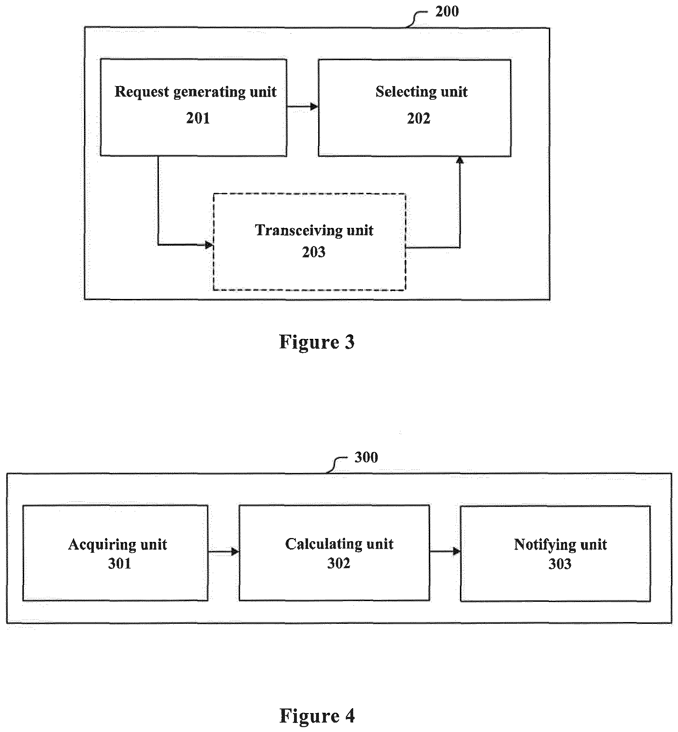

Reference is made to Figure 3, which is a block diagram of a structure of an apparatus 200 for user equipment side in a wireless communication system according to an embodiment of the present disclosure. The apparatus 200 includes a request generating unit 201 and a selecting unit 202. The request generating unit 201 is configured to generate a connection request including a device type identifying the user equipment. The selecting unit 202 is configured to select resources to be used based on information, which is received from a network management apparatus, on division of a wireless transmission resource pool in response to the connection request.

The user equipment at a position where the apparatus 200 is located is user equipment of a particular type. The request generating unit 201 generates a connection request including information on the type, so that a network management apparatus such as a base station can know the type of the user equipment. Similarly, the particular user equipment in this embodiment may be, for example, vehicle-to-vehicle user equipment or user equipment of a wireless communication system having a priority access license in an SAS. For example, the network management apparatus may update, based on the information on the type, a user feature of particular user equipment belonging to the type in a region served by the network management apparatus, which is related to distribution of the particular user equipment, and determine, based on the user feature, division of a wireless transmission resource pool to be used by the particular user equipment. The network management apparatus may then deliver information on the division to the user equipment. In addition, the connection request may further include location information of the user equipment, so that the network management apparatus such as a base station may determine the region or sub-region where the user equipment is located, thereby obtaining more accurate user feature which is related to the distribution to further determine the division of wireless transmission resources in a better way.

The selecting unit 202 selects resources to be used based on the information on the division. For example, the selecting unit 202 finds available resources by randomly selecting resources and spectrum sensing. In an example, the resources may also be allocated by the network management apparatus directly for the user equipment.

The information on the division may include a division granularity of the wireless transmission resource pool in a spectrum dimension. The wireless transmission resource pool is divided into multiple basic resource units in accordance with the division granularity, and the selecting unit 202 finds an available basic resource unit by spectrum sensing. Specifically, the selecting unit 202 may randomly select a basic resource unit and perform spectrum sensing on the selected basic resource unit, and the selected basic resource unit is used for communication in a case that the selected basic resource unit is idle. Otherwise, the selecting unit 202 randomly selects another basic resource unit and performs spectrum sensing again until an idle basic resource unit is found.

In order to simplify the signaling, the division granularities may be in one to one correspondence with configuration schemes of the basic resource units in the wireless transmission resource pool. In this case, the received information on the division only needs to include information on the division granularity, and the selecting unit 202 may determine the specific division based on the division granularity and select one of the basic resource units for communication.

As shown by a dashed line block in Figure 3, the apparatus 200 may further include a transceiving unit 203. The transceiving unit 203 is configured to transmit the connection request to the network management apparatus and receive the information on the division from the network management apparatus.

When the user equipment is located in different regions, the received information on the division may be different. For example, when the user equipment is located in different cells, or at different locations in the same cell, for example, in the region C and other regions than C within the region A shown in Figure 2, the division of resources may be different.

In addition, when the division changes, the transceiving unit 203 may also receive information on the changed division from the network management apparatus, and the selecting unit 202 selects resources to be used based on the information on the changed division.

<Third Embodiment>

Figure 4 is a block diagram showing a structure of a central management apparatus 300 for multiple wireless communication systems according to an embodiment of the present disclosure. As shown in Figure 4, the central management apparatus 300 includes an acquiring unit 301, a calculating unit 302, and a notifying unit 303. The acquiring unit 301 is configured to acquire information on a user feature of particular user equipment in each of the managed wireless communication systems, which is related to distribution of the particular user equipment. The calculating unit 302 is configured to calculate, based on the information on the user feature acquired by the acquiring unit 301, division of resources in a wireless transmission resource pool to be used by the particular user equipment. The notifying unit 303 is configured to notify the multiple wireless communication systems of the information on the division of resources.

In this embodiment, the central management apparatus 300 not only acquires the user feature of the particular user equipment, which is related to the distribution of the particular user equipment, from each of the managed wireless communication systems, but also calculates the division of wireless transmission resources based on the user feature and notifies each of the wireless communication systems of the division. That is, the calculating unit 302 of the central management apparatus 300 performs the functions of the determining unit 102, so that operations on the network management side can be simplified, as compared with the first embodiment.

The information on the user feature may be denoted by the density information of particular user equipment. The density is represented by, for example, the number of user equipment in the unit region. The density information may be updated in response to an access operation or a disconnection operation of each of the particular user equipment and/or updated periodically. The calculating unit 302 may, for example, add the user equipment densities of the respective wireless communication systems to acquire a final user equipment density in a corresponding region during the calculation. In addition, the user feature which is related to the distribution may also be denoted by a density of particular user equipment that transmit information in unit time in the region. Similarly, in this case, the density is the number of particular user equipment that transmit information in unit time in unit region, and may be updated in response to a change (e.g., starting transmitting information or stopping transmitting information) of a communication state of the particular user equipment and/or updated periodically.

The calculating unit 302 may calculate the division periodically and/or calculate the division when a change of information on the user feature exceeds a predetermined range. The calculating unit 302 may be implemented in a similar manner to that of the determining unit 102 in the first embodiment, and the specific calculation method varies according to actual application scenarios and communication system models.

As an example, the information on the division includes a division granularity of the wireless transmission resource pool in a spectrum dimension. The wireless transmission resource pool is divided into multiple basic resource units in accordance with the division granularity, and each of the particular user equipment communicates using one of the basic resource units. As mentioned above, the division granularity is related to the density of particular user equipment. The division granularity may be set so that the larger the density of the particular user equipment in the region is, and the higher a message admission rate is, the finer the division granularity is. Specifically, the division granularity may be set in such a way that the number of basic resource units is minimized under a condition that communication quality of the particular user equipment and a message admission rate are maintained at predetermined levels. The communication quality may be represented by, for example, a signal-to-interference plus noise ratio (SINR). By minimizing the number of basic resource units, the delay of information transmission can be reduced as much as possible, which is particularly suitable for scenarios with high real-time data transmission requirements. The calculation of the division granularity eventually becomes an optimization problem, which may be implemented by various algorithms including but not limited to linear programming, game theory, graph theory, and the like.

Similarly, the particular user equipment in this embodiment may be, for example, vehicle-to-vehicle user equipment or user equipment of a wireless communication system having a priority access license in an SAS.

<Fourth Embodiment>

The application of the present technology is described below by taking the V2V and a spectrum access system as application examples.

As described above, the V2V is established to transmit and share security information. Due to particularity of the security information, it is desired to establish an information channel with low delay in a communication system and between different communication systems, to achieve information interaction with low delay between operators. In this example, particular user equipment are, for example, vehicles supporting the V2V service or communication devices on a vehicle.

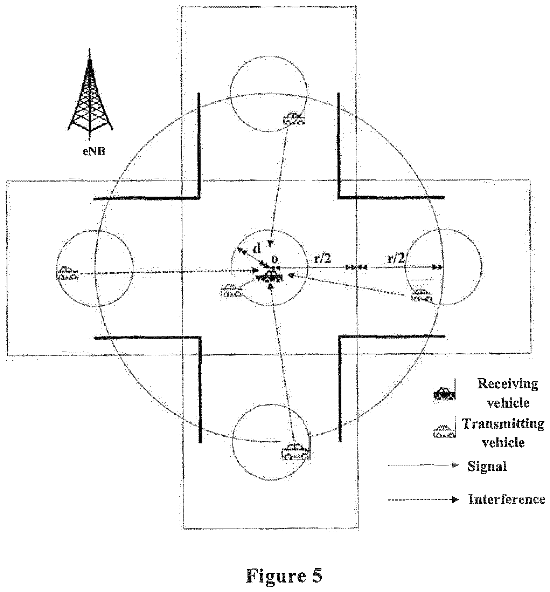

Figure 5 shows a schematic distribution diagram of vehicles in the V2V at an intersection. Firstly, it is assumed that only a unique operator A provides the V2V service in a region shown in Figure 5. The apparatus 100 may be arranged, for example, on an eNB shown in Figure 5. All details of the apparatus 100 described in the first embodiment may be applied to this embodiment, which are not repeated herein.

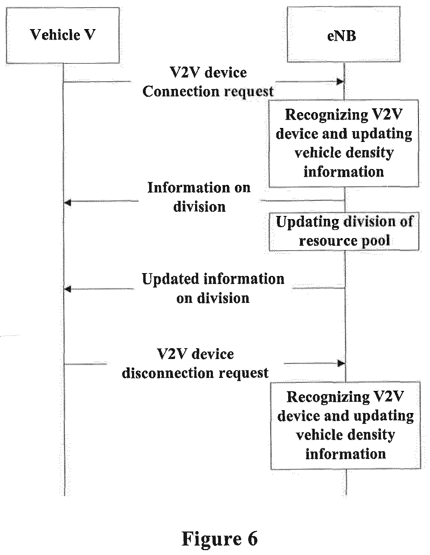

Figure 6 shows a procedure of information interaction between a vehicle V and an eNB. As shown in Figure 6, the vehicle V accesses the eNB by transmitting a V2V device connection request to the eNB. The connection request may indicate to the eNB that the vehicle V is a V2V device. As an example, the apparatus 200 described in the second embodiment may be arranged in the vehicle V.

The apparatus 100 in the eNB (specifically, for example, the storage unit 104) updates its managed vehicle density information after recognizing the vehicle as a V2V device. The vehicle density information may be set to be the number of V2V devices accessing the eNB in its serving range /a road area.

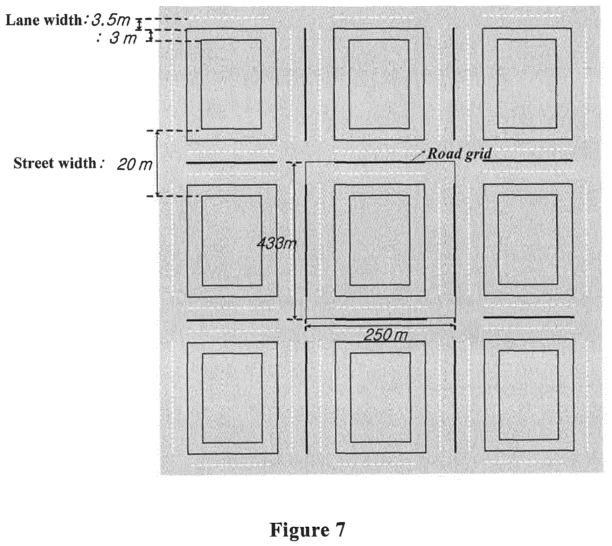

The road area may be obtained by one of the following estimation methods: acquiring an actual road distribution survey result from the traffic management department and accurately calculating the road area based on the data in the result; and roughly estimating the road area in a geographical range by using some basic models and parameter assumptions of road distribution. For example, Figure 7 shows road distribution settings, including parameters such as a road length, a road width, and a spacing region or the like. A road area ratio in unit geographic area may be estimated based on the parameters, and thus the road area in any geographic area can be obtained.

Next, the apparatus 100 transmits information on division of resources to the vehicle V, or the apparatus 100 may directly perform the following operations without transmitting the information on the division. That is, the apparatus 100 (specifically, the determining unit 102) decides whether to recalculate the division of resources, for example, by determining whether a change of the vehicle density information exceeds a predetermined range and/or whether a predetermined time period has elapsed since the last recalculation. In a case that the change of the vehicle density information exceeds the predetermined range or the predetermined time period has elapsed since the last recalculation, the determining unit 102 re-determines the division based on the changed density information, and the apparatus 100 (specifically, the transceiving unit 102) notifies the vehicle V of the updated information on the division by downlink information. It should be noted that, when the division changes, the apparatus 100 needs to transmit the change of the division to all V2V devices that are already connected, so that the V2V devices can reselect resources.

Further, as shown in Figure 6, when the vehicle V is disconnected from the eNB, such as being shut down or going out of the coverage range of the eNB, the apparatus 100 also needs to update the managed vehicle density information in addition to performing the usual operations, and recalculate the division of resources when necessary.

It should be noted that since the security information to be transmitted in the V2V service usually has a fixed length, an entire wireless transmission resource pool may be equally divided into multiple basic resource units in the spectrum dimension, so as to reduce the complexity of the division and reduce the collision probability. In this way, the division granularities may be in one to one correspondence with specific division schemes, so that a division scheme corresponding to a granularity may be configured in the V2V device in advance. The V2V device may know the specific division only based on an indication of the granularity.

In calculating the resource division granularity based on the density information, the specific division manner is closely related to the resource allocation method. The following description is given by taking a distributed resource allocation method that guarantees fairness as an example. It is assumed that a spectrum width of a resource pool is B, the resource pool is uniformly divided into $N_R$ basic resource units. A width of each resource unit is denoted as $\Delta = B/N_R$. Any one V2V device randomly selects a resource unit i from the $N_R$ basic resource units at the same probability. The V2V device performs spectrum sensing on the resource unit i, and occupies the resource unit i and transmits information in a case that the resource unit i is idle; otherwise the V2V device randomly selects a next resource unit j, and performs the operation repeatedly until the V2V device finds available resources.

Referring back to the distribution diagram shown in Figure 5, it is assumed that in any one dashed line block with a side length r in Figure 5, each of the $N_R$ basic resource units is exactly used once without repetition. Without loss of generality, a receiving vehicle of the resource unit i is located at a center o, and a distance between a transmitting vehicle and the receiving vehicle of the resource unit i is an average vehicle distance d. In this case, a signal intensity received by the receiving vehicle is expressed by a function S(d) which is related to the distance d, where the function S(*) is determined depending on a specific channel model. The channel models may be implemented by various existing models, which are not described herein. The four adjacent dotted line blocks have the same distribution, i.e., an emitting source multiplexing the resource unit i is located in a circle with a center of each dotted line block as an origin and d as a radius. In the case of r»d, the emitting source is located approximately at the center of the circle. In this case, interference on the receiving vehicle is expressed by $\sum_{i=1}^{n} S(r)$. In addition, due to particularity of the geographic location of the intersection, it may be assumed that there is one interference source vehicle in each of the four directions, i.e., n=4. In order to ensure that the receiving vehicle can decode the signal correctly, a signal-to-interference plus noise ratio SINR should exceed a threshold $SINR_{TH}$, as shown in an inequation (2) below.

Another system performance requirement is that a message admission rate ρ should exceed a threshold $\rho_{TH}$, as shown in an inequation (3). As described above, the message admission rate is defined as a ratio of the number $N_R$ of basic resource units to the number $N_M$ of messages. The number $N_M$ of messages is calculated as shown in equation (4), where A(r), represents a road area in the circle, $\lambda_v$ represents a vehicle density, $\theta_M$ is an average arrival time interval of messages for each vehicle, and $T(\Delta, L_M, f_M)$ represents a total transmission time of each message, which may be further expressed as a composite function of a basic resource unit width $\Delta$, an average length $L_M$ of the messages and an average frequency $f_M$ of transmitting the messages. The function is related to the particular wireless communication system, and the function $\lceil * \rceil$ is a ceiling function. An optimization object is to find the minimum value of $N_R$ under the condition of satisfying (2) to (4), as shown in an expression (1). That is, the number of basic resource units is minimized, to reduce the time required for blind detection of devices receiving information on the resource pool, that is, to reduce the delay of security information transmission.

$$\min N_R \quad s.t. \qquad (1)$$

$$\text{SINR} = \frac{S(d)}{\sum_{i=1}^{n} S(r) + N} > SINR_{TH} \qquad (2)$$

$$\rho = \frac{N_R}{N_M} > \rho_{TH} \qquad (3)$$

$$N_M = A(r) * \lambda_V * \left\lceil \frac{T(\Delta, L_M, f_M)}{\theta_M} \right\rceil \qquad (4)$$

It should be understood that, the foregoing is only an exemplary method for calculating the division granularity, and the present disclosure is not limited thereto. The division granularity may be accordingly calculated depending on user equipment distributions, channel models, user equipment arrivals, service arrivals, and the like in specific application scenarios. For example, the V2V devices as the interference source in the above calculation is assumed to be uniformly distributed, and the V2V device may also be not uniformly distributed. In the latter case, it is required to calculate the interference based on the position of the interference source.

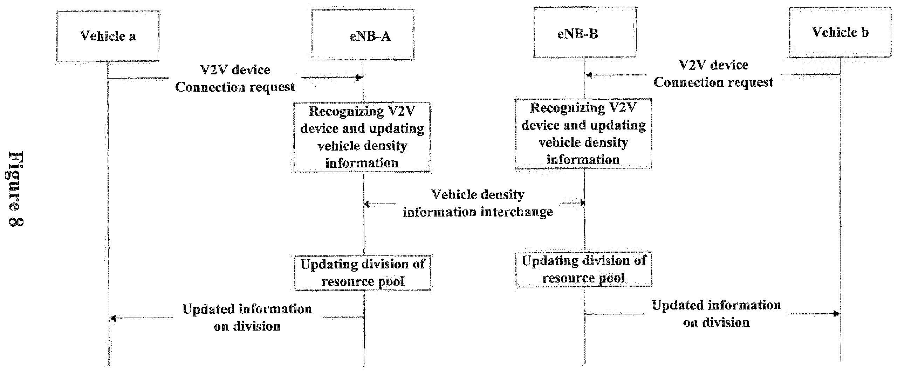

In another example, there may be multiple operators in the region shown in Figure 5, for example, an operator A and an operator B jointly provide V2V services. It is assumed that a vehicle a accesses an eNB-A of the operator A, and a vehicle b accesses an eNB-B of the operator B. In this case, in addition to performing the various operations described above in the case of a single operator, the density information of vehicles served by other operators should further be acquired in acquiring the vehicle density information. Figure 8 shows a schematic diagram of a signaling procedure in a case that there are multiple operators in the same region. As shown in Figure 8, which is similar to Figure 6, the eNB-A and the eNB-B update the respective managed vehicle density information after recognizing the vehicle a and the vehicle b as V2V devices. Therefore, the eNB-A and the eNB-B covering the same region exchange the respective vehicle density information $\lambda_{v,a}$ and $\lambda_{v,b}$. The eNB-A and the eNB-B calculate the vehicle density in the region based on an expression $\lambda_v = \lambda_{v,a} + \lambda_{v,b}$, and calculate the respective division granularities based on the calculated density information. In the calculation, the calculation methods used in the case of the single operator described above may still be used, which are not repeated herein. The vehicle density information may be interacted between the eNBs in response to an access operation or a disconnection operation of each of the particular user equipment, and/or the process may be performed periodically.

Alternatively, the eNB-A and the eNB-B may report the respective vehicle density information $\lambda_{v,a}$ and $\lambda_{v,b}$ to a central management apparatus (which may also be referred to as a coordination device). The central management apparatus coordinates operations of multiple wireless communication systems in the region. For example, the central management apparatus calculates a total vehicle density $\lambda_v = \lambda_{v,a} + \lambda_{v,b}$ in the region and provides the calculated total vehicle density to the apparatus for network management side in each of the wireless communication systems, such as the eNB.

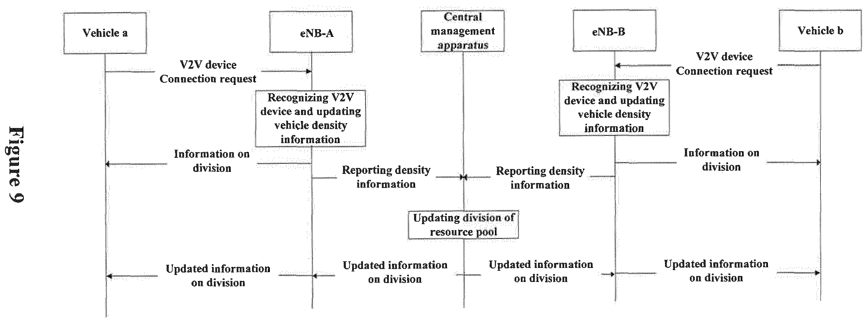

In addition, the central management apparatus 300 described in the third embodiment may also be utilized to further calculate the division of the resource pool based on the total vehicle density. Figure 9 shows a schematic diagram of an information procedure where a division granularity is calculated by a central management apparatus. As shown in Figure 9, the eNB-A and the eNB-B report the respective vehicle density information to a central management apparatus. The central management apparatus acquires a total vehicle density in the region based on, for example, the vehicle density information, recalculates the division of the resource pool such as the division granularity based on the total vehicle density, and provides the updated division information to each of the eNBs. Then the eNB transmits the updated division information to vehicles served by the eNB.

It should be noted that, in this case, the central management apparatus further collects various information required for calculating the division granularity from each of the wireless communication systems. The division granularity may be calculated with the same method as that in the case of the single wireless communication system described above, which is not repeated herein.

It should be understood that although the vehicle density is taken as the user feature of user equipment which is related to distribution herein, other distribution features may also be adopted alternatively/supplementally. For example, the distribution feature may be denoted by a density of particular user equipment that transmit information in unit time in the region, or actual spatial distribution of user equipment. In the case of adopting other distribution features, the calculation of division of resources may be changed accordingly. Further, the case where there are two operators is shown, but the above description may also be applied to a case where there are more operators.

Although the present technology is described above with the V2V as an application scenario, the application of the present technology is not limited thereto. The present technology may be applied to any resource management scenario that supports the coexistence of multiple systems. As another example, an application of the present technology in the multi-layer system coexistence management for the 3.5 GHz system of a spectrum access system (SAS) is described below.

In the United States, the 3.5 GHz frequency band has been used in the Defense Department radar system. Currently, the Federal Communications Commission (FCC) proposes to commercialize the frequency band by spectrum sharing. The sharing system is part of the SAS and may be divided into three levels, i.e., an incumbent user level, a priority access license (PAL) level for citizen broadband wireless services, and a general authorized access (GAA) level for citizen broadband wireless services. The incumbent user level represents the highest level, which needs to be protected from harmful interference from users of citizen broadband wireless services. The incumbent user level includes the above-described Defense Department radar system, fixed satellite services, and privileged terrestrial wireless services in a limited time period. The PAL needs to be protected from harmful interference from the GAA. The citizen broadband wireless services may be allocated resources in units of census tracts. For example, the PALs are issued at a frequency interval of 10 MHz for a time period of 3 years, the total spectrum of all PALs in each census tract does not exceed 70 MHz, and the spectrum of each PAL does not exceed 40MHz. The GAA may use the spectrum in a range of 3550 to 3650 MHz under a condition that no harmful interference is caused on all high-level users.

It can be seen that the PAL provides an exclusive access mode with timeliness. However, in a case that users in multiple PALs in a census tract are not distributed in a balanced way, for example, the number of users in a PAL is large while the number of users in another PAL is very small, the resources need to be shared between multiple PALs, to effectively ensure the resource utilization rate.

It is assumed that there are two priority access license holders PAL-A and PAL-B, which provide services to the respective users UE-a and UE-b, respectively. In an example, the apparatus 100 in the first embodiment may be arranged at network management side of each of the PAL-A and the PAL-B, that is, the division of resources is calculated by the PAL-A and the PAL-B. It should be understood that, all details of the apparatus 100 described in the first embodiment may be applied to this example, which are not repeated herein.

The UE-a and the UE-b respectively access the PAL-A and the PAL-B, and indicate respective service types, for example, in a connection request. The apparatus 100 updates, for example, in response to the access, user features of user equipment, which are related to the service types, such as user densities $\lambda_{v,a}$ and $\lambda_{v,b}$.

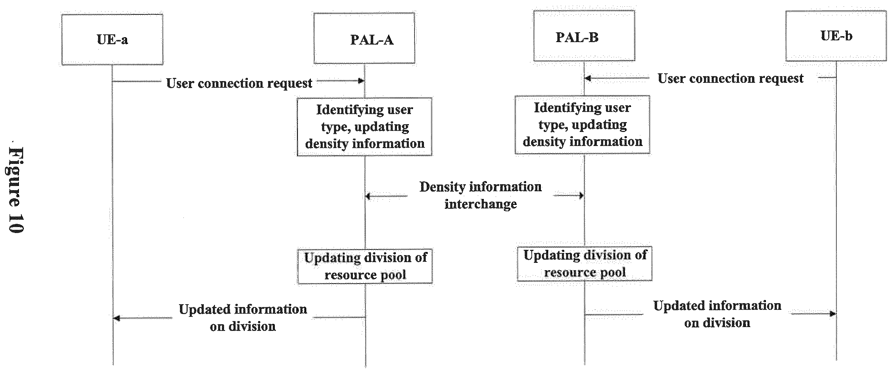

Similarly, the respective user density information is interacted between the two PALs to obtain a total user density $\lambda_v = \lambda_{v,a} + \lambda_{v,b}$. The apparatus 100 recalculates the division granularity in a case that the change of the density exceeds a predetermined range and/or a predetermined time period has elapsed since the last recalculation, and provides the new division granularity to the accessed user equipment. The related information procedure is shown in Figure 10, which is similar to that in Figure 8 and is not described in detail herein.

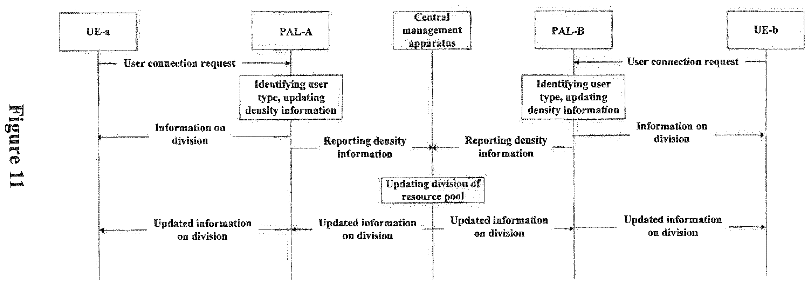

In addition, a central management apparatus may also be provided to coordinate operations of the PAL-A and the PAL-B. In this case, the PAL-A and the PAL-B may report the respective density information $\lambda_{v,a}$ and $\lambda_{v,b}$ to the central management apparatus, and the central management apparatus calculates the division granularity and informs the PAL-A and the PAL-B of the division granularity or a change thereof. The related information procedure is shown in Figure 11, which is similar to that in Figure 9 and is not described in detail herein. In a spectrum access system, the central management apparatus may be located, for example, in a geographical location database or spectrum management apparatus.

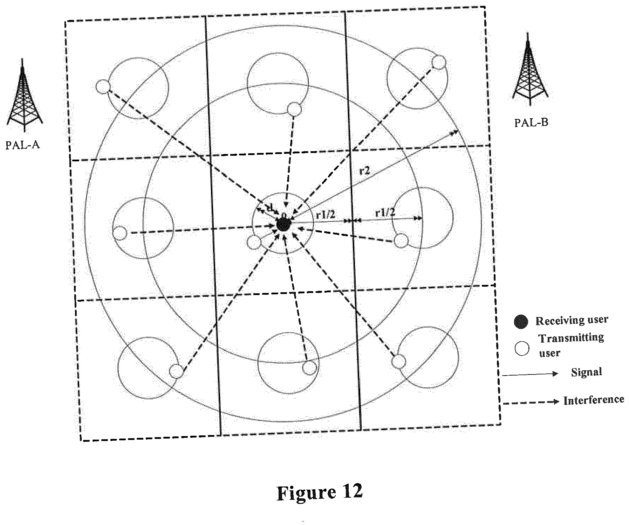

The division granularity may be calculated specifically with a similar method to that described above with reference to Figure 3, except that the calculation for the interference is slightly different. Figure 12 shows a distribution diagram of a census tract. It is assumed that any one dashed line block with a side length r1 represents a census tract. Each census tract reuses $N_R$ basic resource units in the 3.5 GHz system of the SAS. The $N_R$ basic resource units are acquired by dividing the resources corresponding to the PAL-A and the PAL-B in a spectrum dimension. Figure 12 differs from Figure 5 in the calculation of the interference which the receiving user is subjected to. Due to particularity of the geographic location distributed in grids, it may be assumed that there are one interference source user in eight adjacent grids, that is, the total number of interferences is indicated by n=8. The four interferences in the regions adjacent to the central grid edge are calculated as $\sum_{i=1}^{4} S(r1)$, and the four interferences in the regions adjacent to the central grid point are calculated as $\sum_{i=1}^{4} S(r2)$, and thus the total interference is expressed by $\sum_{i=1}^{4} S(r1) + \sum_{i=1}^{4} S(r2)$. Other calculations may still be performed using expressions (1) to (4).

In this way, the resources are shared between the PAL-A and the PAL-B or even more PALs based on the spatial distribution of user equipment, effectively ensuring the resource utilization rate.

It should be understood that although the present technology is described above by taking the V2V and the spectrum access system as examples, the application range of the present technology is not limited thereto. The present technology may be applied to any scenario in which multiple user equipment share transmission resources.

<Fifth Embodiment>

In the process of describing the apparatus for network management side and user equipment side in a wireless communication system and the central management apparatus in the embodiments described above, obviously, some processing and methods are also disclosed. Hereinafter, an overview of the methods is given without repeating some details disclosed above. However, it should be noted that, although the methods are disclosed in a process of describing the apparatus for network management side and user equipment side in a wireless communication system and the central management apparatus, the methods do not certainly employ or are not certainly executed by the aforementioned components. For example, the embodiments of the apparatus for network management side and user equipment side in a wireless communication system and the central management apparatus may be partially or completely implemented with hardware and/or firmware, the methods described below may be executed by a computer-executable program completely, although the hardware and/or firmware of the apparatus for network management side and user equipment side in a wireless communication system and the central management apparatus can also be used in the methods.

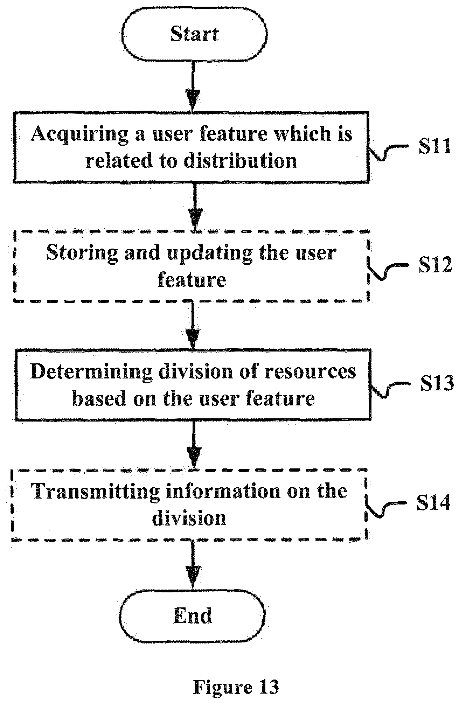

Figure 13 shows a flowchart of a method for network management side in a wireless communication system according to an embodiment of the present disclosure. The method includes: acquiring a user feature of particular user equipment in a region served by the wireless communication system, which is related to distribution of the particular user equipment (S11); and determining, based on the acquired user feature, division of resources in a wireless transmission resource pool to be used by the particular user equipment (S13).

In step S11, in a case that there is only one wireless communication system in a region, the user feature may be obtained directly. In addition, in a case that there are two or more wireless communication systems in the region, the particular user equipment include first particular user equipment served by a first wireless communication system and second particular user equipment served by a second wireless communication system, and a region served by the second wireless communication system is at least partially overlapped with a region served by the first wireless communication system. For the overlapped region, a first user feature of the first particular user equipment which is related to distribution of the first particular user equipment and a second user feature of the second particular user equipment which is related to distribution of the second particular user equipment are acquired, and a user feature of particular user equipment in the overlapped region, which is related to distribution of the particular user equipment in the overlapped region, is acquired by combining the first user feature and the second user feature. In an example, the second user feature may be acquired from the second wireless communication system. In addition, the first user feature may be provided to the second wireless communication system.

The user feature, including the first user feature and the second user feature may be updated in at least one of the following manners: being updated in response to an access operation or a disconnection operation of each of the particular user equipment, and being updated periodically.

As shown by one dashed line block in Figure 13, the above method may further include step S12 of storing and updating the user feature of the particular user equipment which is related to the distribution of the particular user equipment. In step S11, the acquiring may be performed by querying the stored user feature.

In another aspect, in step S11, the user feature which is related to the distribution may also be received from a central management apparatus, which coordinates operations of multiple wireless communication systems in the region.

As an example, the user feature of the particular user equipment may be denoted by density information of the particular user equipment in the region. Alternatively, the user feature of the particular user equipment may be denoted by density information of particular user equipment that transmit information in unit time in the region.

In step S13, the resources in the wireless transmission resource pool are divided based on the user feature acquired in step S11. For example, the wireless transmission resource pool may be divided into multiple basic resource units in a spectrum dimension in accordance with a division granularity, and each of the particular user equipment communicates using one of the basic resource units, which may be random. The division granularities may be in one to one correspondence with configuration schemes of the basic resource units in the wireless transmission resource pool.

The division granularity may be set so that the larger the density of the particular user equipment in the region is, and the higher a message admission rate is, the finer the division granularity is. For example, the division granularity is set in such a way that the number of basic resource units is minimized under a condition that the communication quality of the particular user equipment and the message admission rate are maintained at predetermined levels, so that the delay of information transmission can be reduced as much as possible.

In step S13, the resources may be divided periodically and/or divided when a change of the acquired distribution exceeds a predetermined range.

As shown by another dashed line block in Figure 13, the above method may further include step S14 of transmitting information on the division determined by a determining unit to the particular user equipment. In an example, the information on the division includes a division granularity of the wireless transmission resource pool in the spectrum dimension.

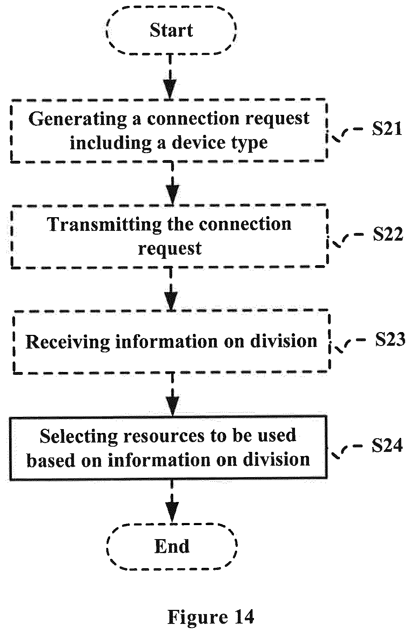

Figure 14 shows a flowchart of a method for user equipment side in a wireless communication system according to an embodiment of the present disclosure. The method includes: generating a connection request including a device type identifying the user equipment (S21); and selecting resources to be used based on information, which is received from a network management apparatus, on division of a wireless transmission resource pool in response to the connection request (S24).

As shown by a dashed line block in Figure 14, the above method further includes: transmitting the connection request to the network management apparatus (S22); and receiving information on the division from the network management apparatus (S23).

The information on the division may include a division granularity of the wireless transmission resource pool in a spectrum dimension. The wireless transmission resource pool is divided into multiple basic resource units in accordance with the division granularity. In step S24, an available basic resource unit is found via spectrum sensing. For example, the division granularities may be in one to one correspondence with configuration schemes of the basic resource units in the wireless transmission resource pool. The setting of the division granularity has been described in detail in the foregoing embodiments, which is not repeated herein.

When the user equipment is located in different regions, the information on the division may be different.

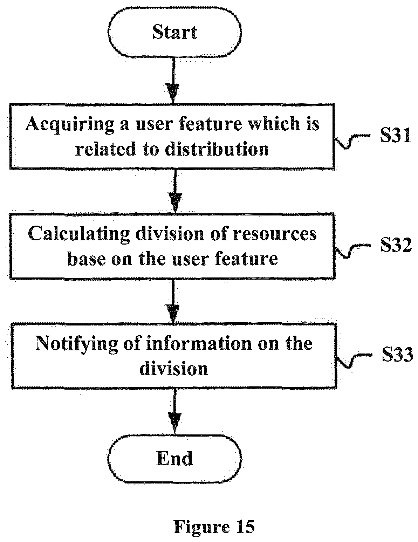

Figure 15 shows a central management method for multiple wireless communication systems according to an embodiment of the present disclosure. The central management method includes: acquiring information on a user feature of particular user equipment in each of the managed wireless communication systems, which is related to distribution of the particular user equipment (S31); calculating, based on the acquired information on the user feature, division of resources in a wireless transmission resource pool to be used by the particular user equipment (S32); and notifying the multiple wireless communication systems of information on the division of resources (S33).

The information on the user feature may be denoted by density information of the particular user equipment. Step S32 may be performed periodically and/or performed when a change of the information on the user feature exceeds a predetermined range.

The information on the division may include a division granularity of the wireless transmission resource pool in a spectrum dimension. The wireless transmission resource pool is divided into multiple basic resource units in accordance with the division granularity, and each of the particular user equipment communicates using one of the basic resource units. The division granularity may be set so that the larger the density of the particular user equipment in the region is, and the higher a message admission rate is, the finer the division granularity is.

In step S32, the division granularity may be calculated in such a way that the number of basic resource units is minimized under a condition that communication quality of the particular user equipment and a message admission rate are maintained at predetermined levels.

The above-described particular user equipment may be vehicle-to-vehicle user equipment or user equipment of a wireless communication system having a priority access license in a spectrum access system.

It is to be noted that, the above methods can be used separately or in conjunction with each other. The details have been described in detail in the first to third embodiments, and are not repeatedly described here.

<Application Example>

The technology of the present disclosure can be applied to various products. For example, the central management apparatus 300 may be implemented as any type of server, such as a tower server, a rack server, and a blade server. The central management apparatus 300 may be a control module (such as an integrated circuit module including a single wafer, and a card or blade inserted into a slot of the blade server) installed on the server.

In addition, the above-described apparatus for network management side may be implemented as any type of evolution Node B (eNB), such as a macro eNB and a small eNB. The small eNB may be an eNB covering a cell smaller than a macro cell, such as a pico eNB, a micro eNB and a home (femto) eNB. Alternatively, the base station may be implemented as any other type of base station, such as a NodeB and a base transceiver station (BTS). The base station may include: a main body (also referred to as a base station device) configured to control wireless communication; and one or more remote radio heads (RRH) arranged at positions different from the main body. In addition, various types of user equipment described below may operate as a base station by temporarily or semi-persistently executing the function of the base station.

For example, the user equipment may be implemented as mobile terminals (such as a smart phone, a tablet personal computer (PC), a notebook PC, a portable game terminal, a portable/dongle mobile router and a digital camera) or a vehicle terminal (such as a car navigation apparatus). The user equipment may also be implemented as a terminal (also referred to as a machine type communication (MTC) terminal) that performs machine-to-machine (M2M) communication. In addition, the user equipment may be a wireless communication module (such as an integrated circuit module including a single wafer) installed on each of the above terminals.

[Application Example Regarding Base Station]

(First Application Example)

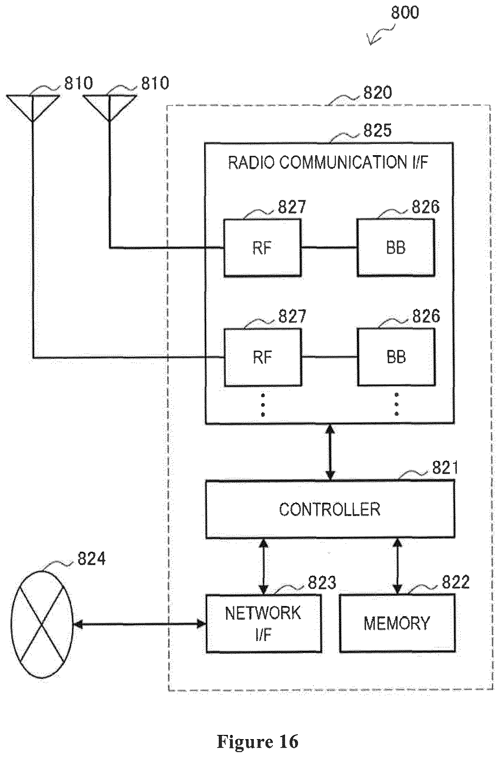

Figure 16 is a block diagram illustrating a first example of a schematic configuration of an eNB to which the technology of the present disclosure may be applied. An eNB 800 includes one or more antennas 810 and a base station apparatus 820. Each antenna 810 and the base station apparatus 820 may be connected to each other via an RF cable.

Each of the antennas 810 includes a single or multiple antenna elements (such as multiple antenna elements included in an MIMO antenna), and is used for the base station apparatus 820 to transmit and receive radio signals. The eNB 800 may include the multiple antennas 810, as illustrated in Figure 16. For example, the multiple antennas 810 may be compatible with multiple frequency bands used by the eNB 800. Although Figure 16 illustrates the example in which the eNB 800 includes the multiple antennas 810, the eNB 800 may also include a single antenna 810.

The base station apparatus 820 includes a controller 821, a memory 822, a network interface 823, and a radio communication interface 825.

The controller 821 may be, for example, a CPU or a DSP, and operates various functions of a higher layer of the base station apparatus 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control, and scheduling. The control may be performed in corporation with an eNB or a core network node in the vicinity. The memory 822 includes RAM and ROM, and stores a program that is executed by the controller 821, and various types of control data (such as a terminal list, transmission power data, and scheduling data).

The network interface 823 is a communication interface for connecting the base station apparatus 820 to a core network 824. The controller 821 may communicate with a core network node or another eNB via the network interface 823. In that case, the eNB 800, and the core network node or the other eNB may be connected to each other through a logical interface (such as an S1 interface and an X2 interface). The network interface 823 may also be a wired communication interface or a radio communication interface for radio backhaul. If the network interface 823 is a radio communication interface, the network interface 823 may use a higher frequency band for radio communication than a frequency band used by the radio communication interface 825.

The radio communication interface 825 supports any cellular communication scheme such as Long Term Evolution (LTE) and LTE-Advanced, and provides radio connection to a terminal positioned in a cell of the eNB 800 via the antenna 810. The radio communication interface 825 may typically include, for example, a baseband (BB) processor 826 and an RF circuit 827. The BB processor 826 may perform, for example, encoding/decoding, modulating/demodulating, and multiplexing/demultiplexing, and performs various types of signal processing of layers (such as Ll, medium access control (MAC), radio link control (RLC), and a packet data convergence protocol (PDCP)). The BB processor 826 may have a part or all of the above-described logical functions instead of the controller 821. The BB processor 826 may be a memory that stores a communication control program, or a module that includes a processor and a related circuit configured to execute the program. Updating the program may allow the functions of the BB processor 826 to be changed. The module may be a card or a blade that is inserted into a slot of the base station apparatus 820. Alternatively, the module may also be a chip that is mounted on the card or the blade. Meanwhile, the RF circuit 827 may include, for example, a mixer, a filter, and an amplifier, and transmits and receives radio signals via the antenna 810.

The radio communication interface 825 may include the multiple BB processors 826, as illustrated in Figure 16. For example, the multiple BB processors 826 may be compatible with multiple frequency bands used by the eNB 800. The radio communication interface 825 may include the multiple RF circuits 827, as illustrated in Figure 16. For example, the multiple RF circuits 827 may be compatible with multiple antenna elements. Although Figure 16 illustrates the example in which the radio communication interface 825 includes the multiple BB processors 826 and the multiple RF circuits 827, the radio communication interface 825 may also include a single BB processor 826 or a single RF circuit 827.

In the eNB 800 shown in Figure 16, the transceiving unit 103 described with reference to Figure 1 may be implemented by the radio communication interface 825. At least part of functions may also be implemented by the controller 821. For example, the controller 821 may determine division of resources in a wireless transmission resource pool based on a user feature which is related to distribution by performing the functions of the acquiring unit 101, the determining unit 102, and the storage unit 104.

(Second Application Example)

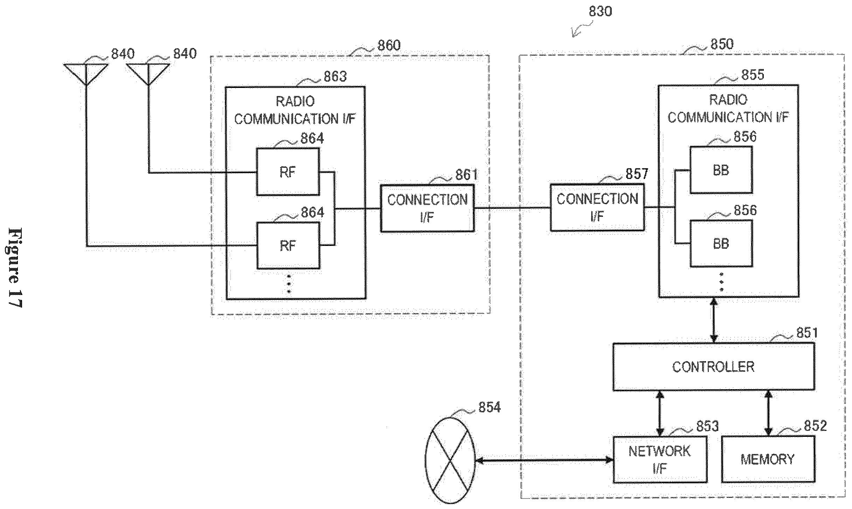

Figure 17 is a block diagram illustrating a second example of a schematic configuration of an eNB to which the technology of the present disclosure may be applied. An eNB 830 includes one or more antennas 840, a base station apparatus 850, and an RRH 860. Each antenna 840 and the RRH 860 may be connected to each other via an RF cable. The base station apparatus 850 and the RRH 860 may be connected to each other via a high speed line such as an optical fiber cable.

Each of the antennas 840 includes a single or multiple antenna elements (such as multiple antenna elements included in an MIMO antenna), and is used for the RRH 860 to transmit and receive radio signals. The eNB 830 may include the multiple antennas 840, as illustrated in Figure 17. For example, the multiple antennas 840 may be compatible with multiple frequency bands used by the eNB 830. Although Figure 17 illustrates the example in which the eNB 830 includes the multiple antennas 840, the eNB 830 may also include a single antenna 840.

The base station apparatus 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 16.

The radio communication interface 855 supports any cellular communication scheme such as LTE and LTE-Advanced, and provides radio communication to a terminal positioned in a sector corresponding to the RRH 860 via the RRH 860 and the antenna 840. The radio communication interface 855 may typically include, for example, a BB processor 856. The BB processor 856 is the same as the BB processor 826 described with reference to Figure 16, except the BB processor 856 is connected to the RF circuit 864 of the RRH 860 via the connection interface 857. The radio communication interface 855 may include the multiple BB processors 856, as illustrated in Figure 17. For example, the multiple BB processors 856 may be compatible with multiple frequency bands used by the eNB 830. Although Figure 17 illustrates the example in which the radio communication interface 855 includes the multiple BB processors 856, the radio communication interface 855 may also include a single BB processor 856.

The connection interface 857 is an interface for connecting the base station apparatus 850 (radio communication interface 855) to the RRH 860. The connection interface 857 may also be a communication module for communication in the above-described high speed line that connects the base station apparatus 850 (radio communication interface 855) to the RRH 860.

The RRH 860 includes a connection interface 861 and a radio communication interface 863.

The connection interface 861 is an interface for connecting the RRH 860 (radio communication interface 863) to the base station apparatus 850. The connection interface 861 may also be a communication module for communication in the above-described high speed line.

The radio communication interface 863 transmits and receives radio signals via the antenna 840. The radio communication interface 863 may typically include, for example, the RF circuit 864. The RF circuit 864 may include, for example, a mixer, a filter, and an amplifier, and transmits and receives radio signals via the antenna 840. The radio communication interface 863 may include multiple RF circuits 864, as illustrated in Figure 17. For example, the multiple RF circuits 864 may support multiple antenna elements. Although Figure 17 illustrates the example in which the radio communication interface 863 includes the multiple RF circuits 864, the radio communication interface 863 may also include a single RF circuit 864.

In the eNB 830 shown in Figure 17, the transceiving unit 103 described with reference to Figure 1 may be implemented by the radio communication interface 855 and/or the radio communication interface 863. At least part of functions may also be implemented by the controller 851. For example, the controller 851 may determine division of resources in a wireless transmission resource pool based on a user feature which is related to distribution by performing the functions of the acquiring unit 101, the determining unit 102, and the storage unit 104.

[Application Example Regarding User Equipment]

(First Application Example)

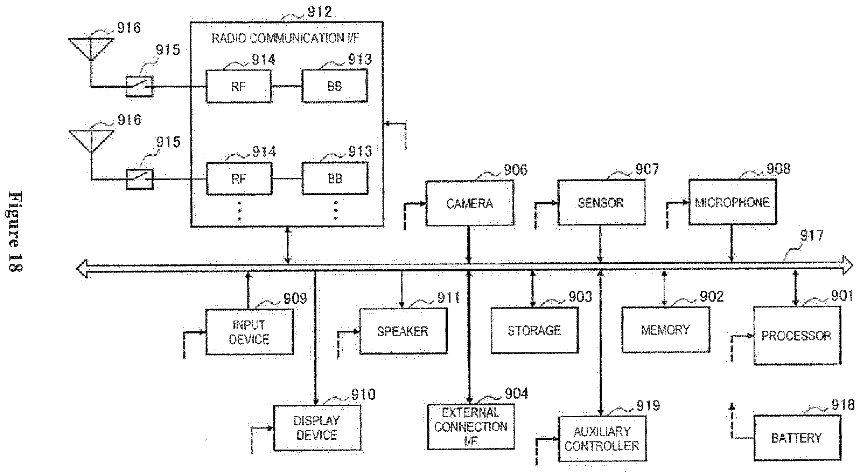

Figure 18 is a block diagram illustrating an example of a schematic configuration of a smartphone 900 to which the technology of the present disclosure may be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes RAM and ROM, and stores a program that is executed by the processor 901, and data. The storage 903 may include a storage medium such as a semiconductor memory and a hard disk. The external connection interface 904 is an interface for connecting an external device such as a memory card and a universal serial bus (USB) device to the smartphone 900.

The camera 906 includes an image sensor such as a charge coupled device (CCD) and a complementary metal oxide semiconductor (CMOS), and generates a captured image. The sensor 907 may include a group of sensors such as a measurement sensor, a gyro sensor, a geomagnetic sensor, and an acceleration sensor. The microphone 908 converts sounds that are input to the smartphone 900 to audio signals. The input device 909 includes, for example, a touch sensor configured to detect touch onto a screen of the display device 910, a keypad, a keyboard, a button, or a switch, and receives an operation or an information input from a user. The display device 910 includes a screen such as a liquid crystal display (LCD) and an organic light-emitting diode (OLED) display, and displays an output image of the smartphone 900. The speaker 911 converts audio signals that are output from the smartphone 900 to sounds.

The radio communication interface 912 supports any cellular communication scheme such as LET and LTE-Advanced, and performs radio communication. The radio communication interface 912 may typically include, for example, a BB processor 913 and an RF circuit 914. The BB processor 913 may perform, for example, encoding/decoding, modulating/demodulating, and multiplexing/demultiplexing, and performs various types of signal processing for radio communication. Meanwhile, the RF circuit 914 may include, for example, a mixer, a filter, and an amplifier, and transmits and receives radio signals via the antenna 916. The radio communication interface 912 may be a one chip module having the BB processor 913 and the RF circuit 914 integrated thereon. The radio communication interface 912 may include the multiple BB processors 913 and the multiple RF circuits 914, as illustrated in Figure 18. Although Figure 18 illustrates the example in which the radio communication interface 912 includes the multiple BB processors 913 and the multiple RF circuits 914, the radio communication interface 912 may also include a single BB processor 913 or a single RF circuit 914.

Furthermore, in addition to a cellular communication scheme, the radio communication interface 912 may support another type of radio communication scheme such as a short-distance wireless communication scheme, a near field communication scheme, and a radio local area network (LAN) scheme. In that case, the radio communication interface 912 may include the BB processor 913 and the RF circuit 914 for each radio communication scheme.

Each of the antenna switches 915 switches connection destinations of the antennas 916 among multiple circuits (such as circuits for different radio communication schemes) included in the radio communication interface 912.

Each of the antennas 916 includes a single or multiple antenna elements (such as multiple antenna elements included in an MIMO antenna), and is used for the radio communication interface 912 to transmit and receive radio signals. The smartphone 900 may include the multiple antennas 916, as illustrated in Figure 18. Although Figure 18 illustrates the example in which the smartphone 900 includes the multiple antennas 916, the smartphone 900 may also include a single antenna 916.

Furthermore, the smartphone 900 may include the antenna 916 for each radio communication scheme. In that case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smartphone 900 illustrated in Figure 18 via feeder lines, which are partially shown as dashed lines in the figure. The auxiliary controller 919 operates a minimum necessary function of the smartphone 900, for example, in a sleep mode.

In the smartphone 900 shown in Figure 18, the transceiving unit 203 described with reference to Figure 3 may be implemented by the radio communication interface 912. At least part of functions may also be implemented by the processor 901 or the auxiliary controller 919. For example, the processor 901 or the auxiliary controller 919 may select resources in a wireless transmission resource pool based on a user feature which is related to distribution by performing the functions of the request generating unit 201 and the selecting unit 202.

(Second Application Example)

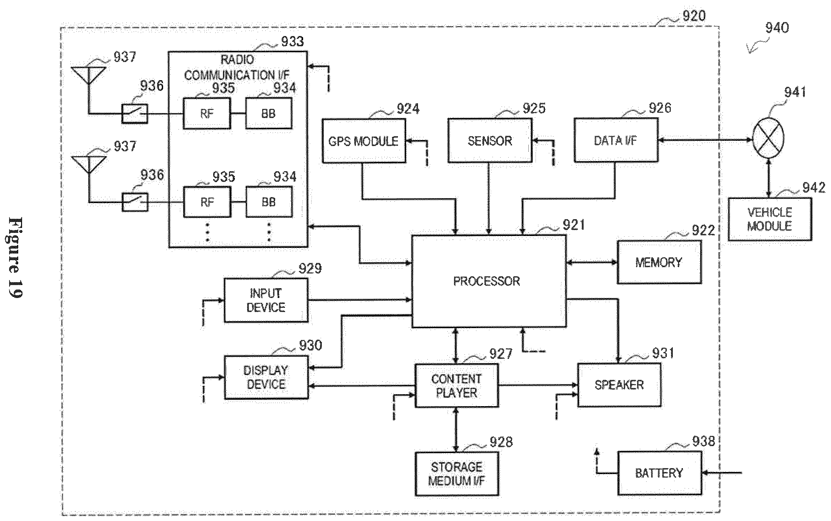

Figure 19 is a block diagram illustrating an example of a schematic configuration of a car navigation apparatus 920 to which the technology of the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or a SoC, and controls a navigation function and another function of the car navigation apparatus 920. The memory 922 includes RAM and ROM, and stores a program that is executed by the processor 921, and data.

The GPS module 924 uses GPS signals received from a GPS satellite to measure a position (such as latitude, longitude, and altitude) of the car navigation apparatus 920. The sensor 925 may include a group of sensors such as a gyro sensor, a geomagnetic sensor, and an air pressure sensor. The data interface 926 is connected to, for example, an in-vehicle network 941 via a terminal that is not shown, and acquires data generated by the vehicle, such as vehicle speed data.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or an information input from a user. The display device 930 includes a screen such as a LCD or an OLED display, and displays an image of the navigation function or content that is reproduced. The speaker 931 outputs sounds of the navigation function or the content that is reproduced.

The radio communication interface 933 supports any cellular communication scheme such as LTE and LTE-Advanced, and performs radio communication. The radio communication interface 933 may typically include, for example, a BB processor 934 and an RF circuit 935. The BB processor 934 may perform, for example, encoding/decoding, modulating/demodulating, and multiplexing/demultiplexing, and performs various types of signal processing for radio communication. Meanwhile, the RF circuit 935 may include, for example, a mixer, a filter, and an amplifier, and transmits and receives radio signals via the antenna 937. The radio communication interface 933 may also be a one chip module that has the BB processor 934 and the RF circuit 935 integrated thereon. The radio communication interface 933 may include the multiple BB processors 934 and the multiple RF circuits 935, as illustrated in Figure 19. Although Figure 19 illustrates the example in which the radio communication interface 933 includes the multiple BB processors 934 and the multiple RF circuits 935, the radio communication interface 933 may also include a single BB processor 934 or a single RF circuit 935.

Furthermore, in addition to a cellular communication scheme, the radio communication interface 933 may support another type of radio communication scheme such as a short-distance wireless communication scheme, a near field communication scheme, and a radio LAN scheme. In that case, the radio communication interface 933 may include the BB processor 934 and the RF circuit 935 for each radio communication scheme.

Each of the antenna switches 936 switches connection destinations of the antennas 937 among multiple circuits (such as circuits for different radio communication schemes) included in the radio communication interface 933.

Each of the antennas 937 includes a single or multiple antenna elements (such as multiple antenna elements included in an MIMO antenna), and is used for the radio communication interface 933 to transmit and receive radio signals. The car navigation apparatus 920 may include the multiple antennas 937, as illustrated in Figure 19. Although Figure 19 illustrates the example in which the car navigation apparatus 920 includes the multiple antennas 937, the car navigation apparatus 920 may also include a single antenna 937.

Furthermore, the car navigation apparatus 920 may include the antenna 937 for each radio communication scheme. In that case, the antenna switches 936 may be omitted from the configuration of the car navigation apparatus 920.

The battery 938 supplies power to blocks of the car navigation apparatus 920 illustrated in Figure 19 via feeder lines that are partially shown as dashed lines in the figure. The battery 938 accumulates power supplied form the vehicle.

In the car navigation apparatus 920 shown in Figure 19, the transceiving unit 203 described with reference to Figure 3 may be implemented by the radio communication interface 933. At least part of functions may also be implemented by processor 921. For example, the processor 921 may select resources in a wireless transmission resource pool based on a user feature which is related to distribution by performing the functions of the request generating unit 201 and the selecting unit 202.

The technology of the present disclosure may also be realized as an in-vehicle system (or a vehicle) 940 including one or more blocks of the car navigation apparatus 920, the in-vehicle network 941, and a vehicle module 942. The vehicle module 942 generates vehicle data such as vehicle speed, engine speed, and trouble information, and outputs the generated data to the in-vehicle network 941.

The basic principle of the present invention has been described above in conjunction with particular embodiments. However, as can be appreciated by those ordinarily skilled in the art, all or any of the steps or components of the method and device according to the invention can be implemented in hardware, firmware, software or a combination thereof in any computing device (including a processor, a storage medium, etc.) or a network of computing devices by those ordinarily skilled in the art in light of the disclosure of the invention and making use of their general circuit designing knowledge or general programming skills.

Those skilled in the art can understand that, the acquiring unit, the determining unit, the storage unit, the request generating unit, the selecting unit and the like in the above-described apparatus may be implemented by one or more processors, and the transceiving unit and the like may be implemented by circuit components such as an antenna, a filter, a modem, and a codec.

Therefore, an electronic device (1) is further provided in the present disclosure, which includes a circuit configured to: acquire a user feature of particular user equipment in a region served by a wireless communication system, which is related to distribution of the particular user equipment; and determine, based on the acquired user feature, division of resources in a wireless transmission resource pool to be used by the particular user equipment.

An electronic device (2) is further provided in the present disclosure, which includes a circuit configured to: generate a connection request including a device type identifying a user equipment; and select resources to be used based on information, which is received from a network management apparatus base station, on division of a wireless transmission resource pool in response to the connection request.

An electronic device (3) is further provided in the present disclosure, which includes a circuit configured to: acquire information on a user feature of particular user equipment in each of the managed wireless communication systems, which is related to distribution of the particular user equipment; calculate, based on the acquired information of the user feature, division of resources in a wireless transmission resource pool to be used by the particular user equipment; and notify multiple wireless communication systems of the information on the division of resources.

Moreover, the present invention further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present invention. The memory medium includes but is not limited to soft disc, optical disc, magnetic optical disc, memory card, memory stick and the like.

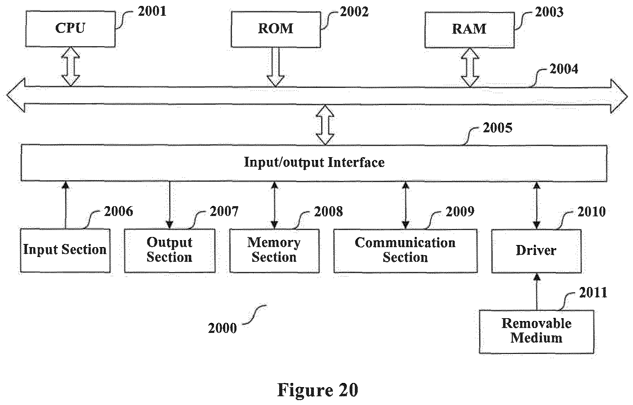

In the case where the present application is realized by software or firmware, a program constituting the software is installed in a computer with a dedicated hardware structure (e.g. the general computer 2000 shown in Figure 20) from a storage medium or network, wherein the computer is capable of implementing various functions when installed with various programs.

In Figure 20, a central processing unit (CPU) 2001 executes various processing according to a program stored in a read-only memory (ROM) 2002 or a program loaded to a random access memory (RAM) 2003 from a memory section 2008. The data needed for the various processing of the CPU 2001 may be stored in the RAM 2003 as needed. The CPU 2001, the ROM 2002 and the RAM 2003 are linked with each other via a bus 2004. An input/output interface 2005 is also linked to the bus 2004.

The following components are linked to the input/output interface 2005: an input section 2006 (including keyboard, mouse and the like), an output section 2007 (including displays such as a cathode ray tube (CRT), a liquid crystal display (LCD), a loudspeaker and the like), a memory section 2008 (including hard disc and the like), and a communication section 2009 (including a network interface card such as a LAN card, modem and the like). The communication section 2009 performs communication processing via a network such as the Internet. A driver 2010 may also be linked to the input/output interface 2005. If needed, a removable medium 2011, for example, a magnetic disc, an optical disc, a magnetic optical disc, a semiconductor memory and the like, may be installed in the driver 2010, so that the computer program read therefrom is installed in the memory section 2008 as appropriate.

In the case where the foregoing series of processing is achieved by software, programs forming the software are installed from a network such as the Internet or a memory medium such as the removable medium 2011.

It should be appreciated by those skilled in the art that the memory medium is not limited to the removable medium 2011 shown in Figure 20, which has program stored therein and is distributed separately from the apparatus so as to provide the programs to users. The removable medium 2011 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 2002 and the memory section 2008 in which programs are stored, and can be distributed to users along with the device in which they are incorporated.

To be further noted, in the apparatus, method and system according to the invention, the respective components or steps can be decomposed and/or recombined. These decompositions and/or recombinations shall be regarded as equivalent schemes of the invention. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ...... "in which an element is defined will not preclude presence of an additional identical element(s) in a process, method, article or device comprising the defined element(s)" unless further defined.

Although the embodiments of the invention have been described above in detail in connection with the drawings, it shall be appreciated that the embodiments as described above are merely illustrative but not limitative of the invention. Those skilled in the art can make various modifications and variations to the above embodiments without departing from the spirit and scope of the invention. Therefore, the scope of the invention is defined merely by the appended claims and their equivalents.

**Claims**

1. An apparatus for network management side in a wireless communication system, comprising:

   an acquiring unit, configured to acquire a user feature of particular user equipment in a region served by the wireless communication system, which is related to distribution of the particular user equipment; and
   a determining unit, configured to determine, based on the user feature acquired by the acquiring unit, division of resources in a wireless transmission resource pool to be used by the particular user equipment.

2. The apparatus according to claim 1, further comprising:
   a transceiving unit, configured to transmit information on the division determined by the determining unit to the particular user equipment.

3. The apparatus according to claim 1, wherein the user feature of the particular user equipment is denoted by density information of the particular user equipment in the region.

4. The apparatus according to claim 1, wherein the user feature of the particular user equipment is a density of the particular user equipment which transmit information in unit time in the region.

5. The apparatus according to claim 1, further comprising:

   a storage unit, configured to store and update the user feature of the particular user equipment, which is related to the distribution of the particular user equipment,
   wherein the acquiring unit is further configured to query the user feature in the storage unit.

6. The apparatus according to claim 1, wherein the particular user equipment comprise first particular user equipment served by the wireless communication system and second particular user equipment served by a second wireless communication system, a region served by the second wireless communication system is at least partially overlapped with the region served by the wireless communication system, and wherein the acquiring unit is configured to: for the overlapped region, acquire a first user feature of the first particular user equipment which is related to distribution of the first particular user equipment and a second user feature of the second particular user equipment which is related to distribution of the second particular user equipment, and acquire a user feature of particular user equipment in the overlapped region which is related to distribution of the particular user equipment in the overlapped region by combining the first user feature and the second user feature.

7. The apparatus according to claim 6, wherein the acquiring unit is configured to acquire the second user feature from the second wireless communication system and provide the first user feature to the second wireless communication system.

8. The apparatus according to claim 6, wherein the first user feature and the second user feature are respectively updated in at least one of the following manners: being updated in response to an access operation or a disconnection operation of each of the particular user equipment, and being updated periodically.

9. The apparatus according to claim 1, wherein information on the division comprises a division granularity of the wireless transmission resource pool in a spectrum dimension, wherein the wireless transmission resource pool is divided into a plurality of basic resource units in accordance with the division granularity, and each of the particular user equipment communicates using one of the basic resource units.

10. The apparatus according to claim 9, wherein the division granularities are in one to one correspondence with configuration schemes of the basic resource units in the wireless transmission resource pool.

11. The apparatus according to claim 9, wherein the division granularity is set so that the larger the density of the particular user equipment in the region is, and the higher a message admission rate is, the finer the division granularity is.

12. The apparatus according to claim 9, wherein the division granularity is set in such a way that the number of basic resource units is minimized under a condition that communication quality of the particular user equipment and a message admission rate are maintained at predetermined levels.

13. The apparatus according to claim 1, wherein the determining unit is configured to calculate the division of resources periodically, and/or calculate the division of resources when a change of the acquired distribution exceeds a predetermined range.

14. The apparatus according to claim 1, wherein the acquiring unit is configured to acquire the user feature from a central management apparatus, which coordinates operations of a plurality of wireless communication systems in the region.

15. The apparatus according to claim 1, wherein the particular user equipment are vehicle-to-vehicle user equipment or user equipment of a wireless communication system having a priority access license in a spectrum access system.

16. An apparatus for network management side in a wireless communication system, a region served by the wireless communication system comprising a plurality of sub-regions, the apparatus comprising:

an acquiring unit, configured to acquire a user feature of particular user equipment in each of the sub-regions served by the wireless communication system, which is related to distribution of the particular user equipment; and
a determining unit, configured to determine, based on the user feature of each of the sub-regions acquired by the acquiring unit, division of wireless transmission resources to be used by the particular user equipment in each of the sub-regions.

17. An apparatus for user equipment side in a wireless communication system, comprising:

a request generating unit, configured to generate a connection request comprising a device type identifying the user equipment; and
a selecting unit, configured to select resources to be used based on information, which is received from a network management apparatus, on division of a wireless transmission resource pool in response to the connection request.

18. The apparatus according to claim 17, further comprising:
a transceiving unit, configured to transmit the connection request to the network management apparatus and receive the information on the division from the network management apparatus.

19. The apparatus according to claim 17, wherein the connection request further comprises location information of the user equipment.

20. The apparatus according to claim 17, wherein the information on the division comprises a division granularity of the wireless transmission resource pool in a spectrum dimension, wherein the wireless transmission resource pool is divided into a plurality of basic resource units in accordance with the division granularity, and the selecting unit finds an available basic resource unit by spectrum sensing.

21. The apparatus according to claim 20, wherein the division granularities are in one to one correspondence with configuration schemes of the basic resource units in the wireless transmission resource pool.

22. The apparatus according to claim 17, wherein when the user equipment is located in different regions, the information on the division is different.

23. The apparatus according to claim 17, wherein the device type of the user equipment comprises a vehicle-to-vehicle user equipment or a user equipment of a wireless communication system having a priority access license in a spectrum access system.

**24.** A central management apparatus for a plurality of wireless communication systems, comprising:

an acquiring unit, configured to acquire information on a user feature of particular user equipment in each of the managed wireless communication systems, which is related to distribution of the particular user equipment;
a calculating unit, configured to calculate, based on the information on the user feature acquired by the acquiring unit, division of resources in a wireless transmission resource pool to be used by the particular user equipment; and
a notifying unit, configured to notify the plurality of wireless communication systems of the information on the division of resources.

**25.** The central management apparatus according to claim 24, wherein the information on the user feature is denoted by density information of the particular user equipment.

**26.** The central management apparatus according to claim 24, wherein the calculating unit calculates the division periodically and/or calculates the division when a change of the information on the user feature exceeds a predetermined range.

**27.** The central management apparatus according to claim 24, wherein the information on the division comprises a division granularity of the wireless transmission resource pool in a spectrum dimension, wherein the wireless transmission resource pool is divided into a plurality of basic resource units in accordance with the division granularity, and each of the particular user equipment communicates using one of the basic resource units.

**28.** The central management apparatus according to claim 27, wherein the calculating unit calculates the division granularity in such a way that the number of basic resource units is minimized under a condition that communication quality of the particular user equipment and a message admission rate are maintained at predetermined levels.

**29.** The apparatus according to claim 24, wherein the particular user equipment are vehicle-to-vehicle user equipment or user equipment of a wireless communication system having a priority access license in a spectrum access system.

**30.** A method for network management side in a wireless communication system, comprising:

acquiring a user feature of particular user equipment in a region served by the wireless communication system, which is related to distribution of the particular user equipment; and
determining, based on the acquired user feature, division of resources in a wireless transmission resource pool to be used by the particular user equipment.

**31.** A method for user equipment side in a wireless communication system, comprising:

generating a connection request comprising a device type identifying the user equipment; and
selecting resources to be used based on information, which is received from a network management apparatus, on division of a wireless transmission resource pool in response to the connection request.

**32.** A central management method for a plurality of wireless communication systems, comprising:

acquiring information on a user feature of particular user equipment in each of the managed wireless communication systems, which is related to distribution of the particular user equipment;
calculating, based on the acquired information on the user feature, division of resources in a wireless transmission resource pool to be used by the particular user equipment; and
notifying the plurality of wireless communication systems of information on the division of resources.

100

| Acquiring unit 101 | Determining unit 102 |
|---|---|

| Storage unit 104 | Transceiving unit 103 |
|---|---|

**Figure 1**

A

C

B

**Figure 2**

200

| Request generating unit 201 | | Selecting unit 202 |
|---|---|---|

Transceiving unit
203

Figure 3

300

| Acquiring unit 301 | Calculating unit 302 | Notifying unit 303 |
|---|---|---|

Figure 4

Figure 5

**Figure 6**

Figure 7

Figure 8

Figure 9

Figure 10

Figure 11

Figure 12

Start

Acquiring a user feature which is
related to distribution — S11

Storing and updating the user
feature — S12

Determining division of resources
based on the user feature — S13

Transmitting information on the
division — S14

End

Figure 13

Figure 14

Figure 15

800

820

825

RADIO COMMUNICATION I/F

827

826

RF

BB

827

826

RF

BB

810 810

821

CONTROLLER

824

823

822

NETWORK I/F

MEMORY

Figure 16

Figure 17

Figure 18

Figure 19

Figure 20

| INTERNATIONAL SEARCH REPORT | International application No. |
|---|---|
| | PCT/CN2017/071100 |

**A. CLASSIFICATION OF SUBJECT MATTER**

H04W 72/04 (2009.01) i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT; CNKI; WPI; EPODOC; GOOGLE: direct connection, internet of vehicles, resource, carrier frequency, D2D, v2v, num+, density, assign+, allocat+, frequency band, carrier, spectrum

**C. DOCUMENTS CONSIDERED TO BE RELEVANT**

| Category* | Citation of document, with indication, where appropriate, of the relevant passages | Relevant to claim No. |
|---|---|---|
| X | CN 102857874 A (BEIJING UNIVERSITY OF POSTS AND TELECOMMUNICATIONS), 02 January 2013 (02.01.2013), description, paragraphs [0036]-[0040] and figures 1-4 | 1-32 |
| A | CN 103220724 A (BEIJING UNIVERSITY OF POSTS AND TELECOMMUNICATIONS), 24 July 2013 (24.07.2013), the whole document | 1-32 |
| A | CN 104349462 A (HUAWEI TECHNOLOGIES CO., LTD.), 11 February 2015 (11.02.2015), the whole document | 1-32 |
| A | US 2015215948 A1 (UNIVERSITY OF MANCHESTER), 30 July 2015 (30.07.2015), the whole document | 1-32 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 March 2017 (15.03.2017) | **29 March 2017 (29.03.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Caixia** Telephone No.: (86-10) **62413376** |

Form PCT/ISA/210 (second sheet) (July 2009)

## INTERNATIONAL SEARCH REPORT
Information on patent family members

| International application No. |
| --- |
| **PCT/CN2017/071100** |

| Patent Documents referred in the Report | Publication Date | Patent Family | Publication Date |
| --- | --- | --- | --- |
| CN 102857874 A | 02 January 2013 | None | |
| CN 103220724 A | 24 July 2013 | None | |
| CN 104349462 A | 11 February 2015 | None | |
| US 2015215948 A1 | 30 July 2015 | GB 2504985 A | 19 February 2014 |
| | | WO 2014027171 A2 | 20 February 2014 |
| | | WO 2014027170 A2 | 20 February 2014 |
| | | CN 104770004 A | 08 July 2015 |
| | | EP 2885942 A2 | 24 June 2015 |

Form PCT/ISA/210 (patent family annex) (July 2009)

**REFERENCES CITED IN THE DESCRIPTION**

**Patent documents cited in the description**

- CN 201610023653